(19) Europäisches Patentamt / European Patent Office / Office européen des brevets

(11) **EP 3 048 281 B1**

(12) **EUROPEAN PATENT SPECIFICATION**

(45) Date of publication and mention
of the grant of the patent:
**19.04.2017 Bulletin 2017/16**

(51) Int Cl.:
*F02C 3/22* *(2006.01)*          *F02C 7/143* *(2006.01)*
*F02C 7/224* *(2006.01)*         *F01D 25/32* *(2006.01)*

(21) Application number: **15202120.0**

(22) Date of filing: **22.12.2015**

(54) **AIRCRAFT PROPULSION SYSTEM INCLUDING CLOSED POWER CYCLE AND CONDENSER**

FLUGZEUGANTRIEBSSYSTEM MIT EINEM GESCHLOSSENEN ARBEITSZYKLUS UND KONDENSATOR

SYSTÈME DE PROPULSION D'AVION AVEC CYCLE DE TRAVAIL FERMÉ ET CONDENSEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.01.2015 GB 201501045**

(43) Date of publication of application:
**27.07.2016 Bulletin 2016/30**

(73) Proprietor: **Rolls-Royce plc**
**London SW1E 6AT (GB)**

(72) Inventors:
• **Fletcher, Paul**
**Derby, Derbyshire DE24 8BJ (GB)**
• **Swann, Peter**
**Derby, Derbyshire DE24 8BJ (GB)**
• **Moxon, Matthew**
**Derby, Derbyshire DE24 8BJ (GB)**

(74) Representative: **Rolls-Royce plc**
**Intellectual Property Dept SinA-48**
**PO Box 31**
**Derby DE24 8BJ (GB)**

(56) References cited:
**EP-A1- 2 392 796          WO-A2-2014/130117**
**WO-A2-2014/158244**

## Description

Field of the Invention

The present invention relates to an aircraft propulsion system, particularly though not exclusively, to an aircraft propulsion system for reducing or eliminating aircraft vapour trail formation.

Background to the Invention

Vapour trails are artificial clouds that are visible trails of condensed water vapour and/or ice formed as a result of the exhaust of aircraft. They may be formed as warm, moist exhaust gas mixes with ambient air, and arise from the formation of microscopic water droplets or, if the air is cold enough, tiny ice crystals.

It is understood that, depending on the choice of metric and the timescale considered, the climate-warming impact of aircraft exhaust vapour trails and resulting vapour trail-cirrus may be of a magnitude similar to or perhaps even greater than that of the $CO_2$ emitted by aircraft, and therefore may represent a significant element of aviation's total climate impact. It is also understood that an aircraft vapour trail, once formed, will persist in ambient air which is supersaturated with respect to ice, leading to greater climate-warming impact as a result of the increase in longevity of the vapour trail. In a military context, the visibility of such exhaust may give away the location of the aircraft.

US 7971438 discloses one proposed aircraft propulsion system which aims to reduce vapour trail formation by condensing water vapour out of the exhaust gas prior to the exhaust gas being rejected to the atmosphere. The proposed system includes a recuperator heat exchanger configured to exchange heat between the exhaust gasses and the combustor entry gasses, to thereby raise the combustor entry temperature using heat from the exhaust gasses, and so increase efficiency and cool the exhaust gas. The cooled exhaust gas is then passed to a condenser heat exchanger, which uses bypass air to cool the exhaust gas further, and so condense water vapour. A portion of this liquid water may then be used to provide combustor water injection, with the remainder rejected overboard. The further cooled exhaust gas is then used to cool compressor air between compressor stages in an intercooler heat exchanger, thereby re-heating the dehumidified exhaust gas. This dehumidified reheated exhaust gas may be further reheated in a reheating heat exchanger using heat rejected from the condenser. Consequently, both the heat of condensation (from the condenser) and some of the heat of compression (from the intercooler) are rejected to the bypass flow. While this heat may slightly increase the propulsive efficiency of the bypass flow, much of the energy present in this excess heat is not effectively used to provide thrust.

While such a system may be effective in reducing vapour trail formation, such a cycle is relatively complex, having a large number of heat exchangers, each with an associated cost, weight and pressure loss, and so efficiency penalty. Each heat exchanger is essentially a gas to gas heat exchanger, and consequently, each heat exchanger is relatively large and heavy. Though the recuperated, intercooled, water injected cycle increases both the thermodynamic efficiency and specific power of the system compared to a simple cycle gas turbine engine, this may be insufficient to overcome the overall system losses in view of the increased weight and aerodynamic losses in both the core exhaust gas stream and the bypass stream due to the presence of the recuperator and condenser.

Furthermore, the waste heat from the condenser is rejected from the system to the bypass stream, and is not therefore used in the thermodynamic cycle to a significant extent. The condenser is therefore largely "deadweight" in terms of engine efficiency, only being used to reduce vapour trail formation.

Furthermore, whilst in the above patent the condensed water vapour is used to provide combustor water injection, such water injection is only useful at relatively high power settings. Otherwise, the condensed water is unused, and merely dumped overboard.

WO2014/158244 discloses a turbine engine including a fan that provides an air flow to the turbine engine as compressor intake air and as compressor bypass air, a first stage compressor positioned to receive the compressor intake air and output a first stage compressed air, and a boiler positioned to cool the first stage compressed air using a fluid. A second stage compressor is positioned to receive the cooled first stage compressed air. A pump is configured to pump the fluid as a liquid into the boiler, extract energy from the first stage compressed air, and cause the cooling of the first stage compressed air.

WO 2014/130117 discloses a turbine engine assembly having a turbine core with a compressor section, a combustion section, a turbine section, and a nozzle section and a liquid natural gas (LNG) fuel system having a LNG reservoir, a vaporizer heat exchanger, a first liquid supply line operably coupling the LNG reservoir to an input of the vaporizer heat exchanger, a gas supply line operably coupling an output of the vaporizer heat exchanger to the combustion section, a second liquid supply line operably coupling the LNG reservoir to the gas supply line and a thermostatic expansion valve (TEV) and a dual fuel aircraft control system.

EP 2392796 discloses a turboshaft engine comprising a heat converter in combination with at least one catalytic converter. A first heat exchanger is adapted to decrease the temperature to the operating temperature of the at least one catalytic converter. The catalysts may reduce carbon monoxide, hydrocarbons by oxidation and nitrogen oxides by selective catalytic reduction. Furthermore a second heat exchanger is provided in order to transfer the heat extracted from the hot exhaust gas by the first heat exchanger to the entrance of the combustion section. This heating of the compressed air just before the combustion improves the combustion efficiency of the engine thus carbon dioxide emissions can be reduced. Finally the exhaust temperature reduction leads to a reduced Infrared signature of the turboshaft driven aircraft in particular of helicopters.

The present disclosure describes an aircraft propulsion system and a method of which seeks to overcome some or all of the above problems.

Summary of the Invention

According to a first aspect of the present invention, there is provided an aircraft propulsion system, the system comprising:

an internal combustion engine configured to produce an exhaust gas containing water vapour; a first heat exchanger configured to exchange heat from the internal combustion engine exhaust with a working fluid of a closed cycle heat recovery generator configured to convert heat from the exhaust gas to mechanical power; a condenser provided downstream of the first heat exchanger, configured to condense water vapour in the exhaust gas stream; wherein the condenser comprises a heat exchanger configured to exchange heat between the exhaust gas stream and the internal combustion engine fuel.

It is thought that, by employing a closed cycle heat recovery generator to recover exhaust heat from the gas turbine exhaust gasses, it is possible to cool the exhaust gasses sufficiently for the gas turbine engine fuel to be used as the cold sink in the condenser heat exchanger. Consequently, the heat rejected by the condenser is returned to the engine cycle via the engine fuel, while removing water vapour from the engine exhaust. Such a system is more thermodynamically efficient than prior arrangements.

The internal combustion engine may comprise one of a piston engine and a gas turbine engine.

The fuel may comprise liquid hydrocarbon fuel, or may comprise hydrogen gas or liquid hydrogen. Preferably, the fuel may comprise liquefied natural gas (LNG). LNG fuel produces less carbon dioxide per unit of energy burnt than conventional aviation fuel, and is in many cases less expensive, but generally requires storage at a low temperature in order to remain in a liquid state (and therefore have sufficient volumetric energy density), or otherwise requires storage at excessive pressure, which would necessitate a relatively heavy pressure vessel. In the present disclosure, the relatively large heat capacity of the low temperature LNG is utilised to condense water vapour from the exhaust. Consequently, the fuel can be utilised in the condenser in spite of relatively low mass flow rates. Furthermore, where the fuel is a liquid fuel, at least the condenser heat exchanger is a gas to liquid heat exchanger, and so the condenser can be made smaller and lighter compared to prior arrangements comprising gas to gas heat exchangers, thereby potentially reducing the weight of the system.

The closed cycle heat recovery generator may comprise a supercritical carbon dioxide ($CO_2$) working fluid. Supercritical $CO_2$ working fluid permits an energy dense, low weight heat recovery generator, while also permitting energy efficiencies high enough to provide a low output temperature, and so permit effective operation of the condenser. Alternatively, the closed cycle heat recovery generator may comprise liquid water or steam working fluid. The water or steam may be at least in part provided by or replenished by the condenser.

The closed cycle heat recovery generator may comprise a closed Brayton cycle heat recovery generator comprising a compressor, the first heat exchanger, a turbine and a second heat exchanger provided in fluid flow series. The closed Brayton cycle heat recovery generator second heat exchanger may be configured to exchange heat between the closed Brayton cycle heat recovery generator working fluid and a heat sink such as an ambient air stream and/or the internal combustion engine fuel. Where the heat sink comprises ambient air, the second heat exchanger may comprise an external surface of the aircraft such as an aircraft wing surface. Advantageously, the heat rejected by the second heat exchanger is utilised to re-energise boundary layer air flowing over an external surface of the aircraft, and so prevent boundary layer separation, and consequently, reduce aircraft drag. Where the second heat exchanger heat sink comprises internal combustion engine fuel, heat rejected from the closed cycle heat recovery generator second heat exchanger is returned to the internal combustion engine cycle, and so increases overall fuel efficiency.

Alternatively, the closed heat recovery generator may comprise a Rankine cycle heat recovery generator, in which the working fluid comprises steam, and the heat recovery generator comprises the first heat exchanger, a turbine and a second heat exchanger provided in fluid flow series.

The system may comprise a fuel recirculator configured to return a portion of fuel downstream of the condenser to a fuel tank. Advantageously, the mass flow of the fuel used in the condenser can be greater than the fuel flow rate to the internal combustion engine combustor. Consequently, the condenser can operate effectively at higher exhaust temperatures and / exhaust mass flows.

The gas turbine engine may comprise a multistage compressor, and may comprise a multi-spool compressor. The gas turbine engine may comprise an intercooler configured to cool compressor air between compressor stages.

In one embodiment, the intercooler may comprise an air to air heat exchanger, configured to exchange heat between interstage compressor air and ambient air.

In an alternative embodiment, the intercooler may comprise a water to air heat exchanger configured to exchange heat between interstage compressor air and liquid water provided by the condenser. The intercooler may comprise an evaporative cooler.

The system may comprise one or more electrical generators driven by at least one of the internal combustion engine and the closed cycle heat recovery generator. The propulsion system may comprise one or more propulsors such as a fan driven by one or both of the internal combustion engine and the closed cycle heat recovery generator.

The or each propulsor may be driven by an electrical motor provided with electrical power by the or each electrical generator driven by one or both of the gas turbine engine and closed cycle heat recovery generator. It has been found that the cycle of the present disclosure is particularly advantageous for "turbo-electric" propulsion systems, in which at least some of the propulsors are driven by electric motors supplied with power by one or more internal combustion engine and / or heat recovery generator driven electrical generators. This is thought to be the case since, in such systems, a large proportion of propulsive thrust is generated by the propulsors rather than gas turbine core exhaust gas flow. Consequently, pressure losses in the exhaust gas flow caused by the condenser have a relatively small effect on overall propulsive efficiency. However, as will be understood, the invention is also applicable to propulsor directly driven by the internal combustion engine and / or closed cycle heat recovery generator.

The system may comprise one or more water tanks configured to store water provided by the condenser. Where the system includes a plurality of water tanks, each tank may be located in a different position on the aircraft, and a pumping system may be provided configured to transfer water between the tanks. Advantageously, the water produced by the condenser can be used to trim the aircraft, thereby reducing trim drag.

According to a second aspect of the present disclosure, there is provided an aircraft comprising a propulsion system in accordance with the first aspect of the invention.

The aircraft may comprise a trim system configured to transfer water between water tanks to provide aircraft trim, at least a portion of the water being provided by the condenser of the propulsion system.

## Brief Description of the Drawings

Figure 1 shows a schematic perspective view of an aircraft in accordance with the present disclosure, having a propulsion system in accordance with the present disclosure;

Figure 2 shows a schematic illustration of a first aircraft propulsion system in accordance with the present disclosure; and

Figure 3 shows a schematic illustration of a second aircraft propulsion system in accordance with the present disclosure.

## Detailed Description

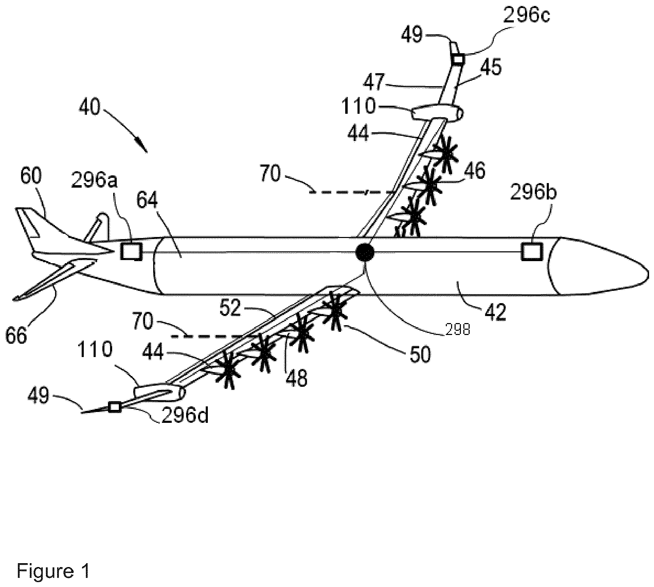

Figure 1 shows an aircraft 40. The aircraft 40 comprises a fuselage 42 having a longitudinal axis 64, a pair of wings 44 extending therefrom generally normal to the fuselage 42, and an empennage located at an aft end of the fuselage 42. The empennage comprises vertical and horizontal tailplanes 60, 66.

A wingspan is defined by the distance between wing tips 49. Each wing 44 comprises a leading edge 45 and a trailing edge 47, which together define a chord extending therebetween. The ratio between the wingspan and chord length defines an aspect ratio. As can be seen from Fig. 1, the chord length varies along the wing span, from a relatively large chord length at the wing root adjacent the fuselage 42, to a relatively small chord length at the wing tips 49. In cases such as this where the chord length varies along the span, the aspect ratio AR can be defined as the square of the wingspan b divided by the area S of the wing planform:

$$AR = \frac{b^2}{S}$$

In the example shown in Fig. 1, the aspect ratio is approximately 25, though higher aspect ratios such as aspect ratios up to 30 or more may be achieved. In other cases, lower aspect ratios may be desirable, such as where the aircraft comprises a short takeoff and landing aircraft (STOL). Each wing 44 preferably further comprises a deployable high lift device in the form of flaps 52 located at the trailing edge 47 of each wing 44. Optionally, the deployable high lift device may include one or more slats (not shown) located at the leading edge 45 of the wing. The flaps 52 are selectable between a stowed position and a deployed position, in which the flaps 52 increase the lift coefficient of the wing 44 compared to when the flaps 52 are in the stowed position. The deployable high lift devices may be deployable to intermediate positions between the deployed and stowed positions. In view of the relatively small area of the wing, and the high aspect ratio, the wing has a high overall lift to drag ratio (L/D).

A propulsion system 100 is provided, comprising a plurality of propulsors 46 provided on each wing 44, which provide thrust to drive the aircraft forward. The plurality of propulsors 46 on each wing together define a centre of thrust 70, i.e. a notional line extending rearwardly from the centre of the airflow provided by the propulsors 46 on that wing 44. In the described embodiment, four propulsors 46 are provided, though more or fewer propulsors may in some cases be provided. The relatively large number of propulsors 46 enables a relatively large propulsor disc area to be employed. Consequently, the propulsors are highly efficient and relatively quiet, without requiring excessive ground clearance, which thereby reduces the length of the undercarriage.

Each propulsor 46 comprises an electric motor 54 housed within a nacelle 48, and a propeller 50 driven by the motor 54, though other forms of propulsors such as electrically driven ducted fans could be employed. Each propeller 50 is located forward of the leading edge 45 of the wing 44, and is mounted to the wing 44 by the nacelle 48. In use, the propellers 50 rotate to provide airflow, and therefore thrust. As the propellers 50 are located forward of the leading edge 45, the airflow travels over the portion of the wing 44 located behind the respective propellers 50, and in particular over the flaps 52. This airflow increases the effective airflow over the wing 44, thereby increasing the coefficient of lift ($C_L$) when the propellers 50 are turning, and particularly where the flaps 52 are extended. The propellers 50 are relatively closely spaced, such that the propellers 50 provide airflow over a large proportion of the wing 44, and particularly, the portion of the wing on which the flaps 52 are located.

In the described embodiment, the maximum coefficient of lift of each wing 44 when the flaps 52 are deployed, and the propulsors 46 are at maximum power ($C_{Lmax(power\ on)}$) is approximately twice the maximum coefficient of lift of each wing 44 when the propulsors 46 are at minimum power ($C_{Lmax(power\ off)}$), i.e. when the propulsors 46 are turned off. Consequently, the propulsors 46 substantially increase the amount of lift generated by the wings 44, thereby reducing the wing area required for a given amount of lift, or increasing the amount of lift for a given wing area. Consequently, a relatively high lift to drag ratio can be provided. The invention is thought to be particularly beneficial in aircraft having high lift to drag ratios, since the added weight of the system compared to a simple cycle turbofan has a smaller penalty on drag (and therefore fuel consumption) compared to conventional aircraft having lower lift to drag ratios.

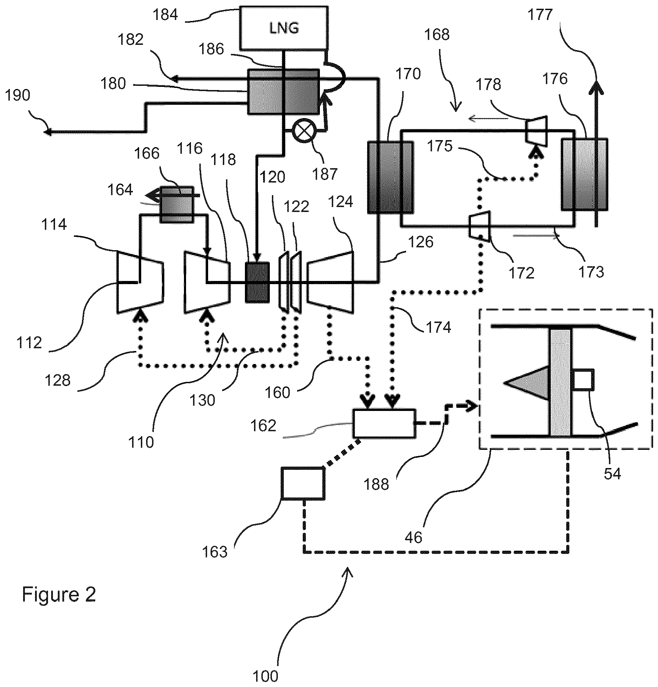

Turning now to figure 2, a propulsion system 100 for the aircraft 40 is shown.

The propulsion system 100 comprises a fuel burning gas turbine engine 110. The gas turbine engine 110 comprises an air intake 112 that generates an airflow A. The gas turbine engine 110 comprises, in axial flow A, a low pressure compressor 114, a high pressure compressor 116, a combustor 118, a high pressure turbine 120, a low pressure turbine 122, a free power turbine 124 and an exhaust passage 126. A nacelle (not shown) surrounds the gas turbine engine 110. Each of the high and low pressure compressors 116, 114 is connected to a respective high and low pressure turbine 120, 122 by a respective shaft 130, 128. The compressors 114, 116, combustor 118, and turbines 120, 122 define a gas generator configured to provide hot, high pressure exhaust gas, and sufficient power to continuously operate the compressors 114, 116. The free power turbine 124 is not connected to the compressors 114, 116 of the gas generator, but rather is connected by a further shaft 160 to an electrical generator 162. In this example, each of the compressor 114, 116 in this example comprises an axial flow compressor comprising an alternating series of rotating blades and stationary stator vanes, though it will be understood that gas turbines comprising centrifugal or axi-centrifugal compressors are also appropriate in some instances.

The gas generator further comprises an optional intercooler 164. The intercooler 164 comprises a heat exchanger configured to cool compressed air exiting the low pressure compressor 114, prior to entry into the high pressure compressor 116. By cooling the compressor air between compressor stages, the density of the air entering the second compression stage is increased, thereby leading to greater engine pressure ratios. Consequently the engine has a greater volumetric efficiency than would otherwise be the case, thereby increasing the power output of the engine, for only a small increase in weight. In this embodiment, the intercooler heat exchanger is configured to exchange heat between low pressure compressor 114 exit air and ambient air provided through a cooling passage 166. Air for the cooling passage is provided by ambient air from outside the aircraft 40.

In operation, air is drawn through the air intake duct 112 into the low pressure compressor 114 where the air is compressed. A further stage of compression takes place in the high pressure compressor 116 before the air is mixed with fuel and burned in the combustor 118. The resulting hot working fluid is discharged through the high pressure turbine 120, the intermediate pressure turbine 122 and the free power turbine 124 in series where work is extracted from the working fluid. The work extracted drives the compressor 114, 116 of the gas generator, and the electrical generator 162. The working fluid, which has reduced in pressure and temperature, is then expelled through the exhaust passage 126 to a downstream process.

A closed cycle heat recovery generator 168 is provided downstream of the gas turbine engine, and is configured to convert waste heat from the exhaust gasses exiting the gas turbine engine to mechanical energy.

The heat recovery generator 168 comprises a Brayton cycle heat recovery generator comprising a first heat exchanger 170 having a first side in thermal contact with exhaust gasses within the exhaust passage 126, and a second side in thermal contact with a working fluid of the heat recovery generator 168. The first heat exchanger 170 is thereby configured to exchange heat between the gas turbine 110 exhaust gasses and the heat recovery generator 168, thereby cooling the gas turbine 110 exhaust gasses, and heating the heat recovery generator 168 working fluid.

The heat recovery generator 168 further comprises a turbine 172, which receives working fluid from the first heat exchanger 170 through a fluid passage 173. In use, working fluid passing through the turbine 172 turns the turbine, thereby converting the heat energy in the working fluid to mechanical energy. The turbine 172 is mechanically coupled to the electrical generator 162 via a shaft 174. Consequently, the heat recovery generator 168 is capable of providing further electrical power from the waste heat exiting the gas turbine engine 110. The generator 162 provides electrical power to the propulsors 46 via an electrical connection.

An energy storage system 163 may also be provided, which may store energy generated by the generator 162 for use by the propulsors 46 and other aircraft electrical systems. The system 163 could for example comprise a battery or hydrogen fuel cell electrically connected to the generator 162, or could comprise a mechanical energy storage device such as a fly wheel. Such an arrangement would allow the propulsors to be throttled up and down for short periods (as would be required to control the aircraft in flight) without throttling the gas turbine engine 110 or associated heat recovery generator 168 up and down. Alternatively or in addition, the propulsors 46 and/or one or more other electrical loads could be operated by the energy storage system 163 on the ground, such that the gas turbine engine 110 could be turned off in such circumstances. Consequently, excessive thermal cycling of the gas turbine engine (and in particular the heat exchangers 170, 176) can be avoided. Optionally, windmilling of the propulsors 46 may be used to generate electrical power, which could be stored using the electrical storage system 163.

Working fluid exiting the turbine 172 of the heat recovery generator 168 then passes further down the passage 173 and through a second heat exchanger 176. The second heat exchanger 176 is configured to exchange heat between the working fluid and a heat sink. In this case, the heat sink comprises ambient air provided through an ambient air passage 177. The second heat exchanger comprises a plurality of tubes (not shown) carrying the working fluid located close to an external surface of the aircraft 40, such that ambient air washing over the aircraft surface in use cools the working fluid. In some cases, this heat can be put to good effect, by placing the heat exchanger in thermal contact with areas of the airframe that may experience boundary flow separation in use (such as the flaps 52 located at the trailing edge of the wing). Consequently, the additional heat will prevent boundary flow separation in that area, and so reduce the drag imposed on the aircraft 40 by that surface.

Working fluid exiting the second heat exchanger 176 of the heat recovery generator is then passed to a compressor 178. The compressor could be of any suitable type, such as a centrifugal compressor. The compressor is driven by the heat recovery generator turbine 172 via a shaft 175. Consequently, power generated by the turbine 172 is used to power the compressor 178, in a similar manner to a gas turbine engine. It will be understood that either one, or both, of the compressor 178 and the turbine 172 could comprise a plurality of stages. It will further be understood that the compressor 178 could comprise a low-pressure compressor and a high-pressure compressor, and the turbine 172 could comprise a high pressure turbine and a low pressure turbine, and the shaft 175 could accordingly comprise a first shaft drivingly connected from the high pressure turbine to the high pressure compressor, and a second shaft drivingly connected from the low pressure turbine to the low pressure compressor. The turbine 172 may additionally or alternatively comprise a free power turbine drivingly connected via shaft 174 to the one or more generator 162. Compressed working fluid exiting the compressor 178 is then passed through the passage 173 back to the first heat exchanger 170, where the cycle is repeated. Such a cycle is known as a closed Brayton cycle engine, in view of the presence of a first heat exchanger 170, turbine 172, second heat exchanger 176, and compressor 178 (thereby constituting a Brayton cycle) and in view of the continuous recirculation of working fluid (thereby constituting a closed cycle).

In the described embodiment, the working fluid of the closed Brayton cycle heat recovery generator comprises supercritical carbon dioxide ($CO_2$). Supercritical carbon dioxide comprises carbon dioxide at a temperature and pressure above the critical point such that the $CO_2$ adopts properties midway between a gas and a liquid. In particular, it behaves as a supercritical fluid above its critical temperature (304.25 K) and critical pressure (7.39 MPa), expanding to fill its container like a gas but with a density like that of a liquid. It has been found that, in many cases, the exhaust gas from the gas turbine engine 110 at the outlet corresponds to a temperature at which closed Brayton cycle generators employing supercritical $CO_2$ can operate with high thermal efficiency (at approximately 40% in some cases). Closed Brayton cycle engines operating with supercritical $CO_2$ also provide a relatively high volumetric and mass power density, and so are particularly advantageous for use in aircraft applications.

Once the exhaust gasses of the gas turbine engine 110 have passed through the first heat exchanger 170 of the heat recovery generator 168, and thereby been cooled, the gasses are then passed to a condenser 180. The condenser 180 is configured to further cool the exhaust gas to a temperature below the condensation temperature of the water within the exhaust gas, thereby forming liquid water. The water is then siphoned off, either for further use, or in this embodiment, exhausted overboard in liquid form. The exhaust gas is then passed to a nozzle 182, where it is mixed with ambient air, and generates a small quantity of thrust. Consequently, air exiting the exhaust passage 126 is substantially dehumidified, and so contrails are less likely to form.

The condenser 180 comprises a heat exchanger configured to exchange heat between exhaust gasses in the passage 126 and fuel for the gas turbine engine 110 provided from a fuel tank arrangement 184 via a fuel line 186. In the described embodiment, the engine 110 is configured to run on Liquefied Natural Gas (LNG). The LNG is stored in the fuel tank arrangement 184 at a temperature and pressure such that the LNG is maintained in liquid form. Ordinarily, LNG has the disadvantage that, when burnt, large amounts of water vapour are produced, which would extend the range of ambient conditions under which contrail formation is possible, relative to the use of conventional jet fuel. However, in the present invention, the condenser 180 ensures that the exhaust gasses are dehumidified. Due to the low temperature of LNG fuel, the heat capacity of the LNG fuel is relatively large. Consequently, the LNG can be used as a heat sink for the exhaust gasses, in spite of the relatively low mass flow. Optionally, a return line 187 may be provided, which is configured to return fuel downstream of the condenser 180 back to the fuel tank arrangement 184. Consequently, the mass flow of fuel through the condenser 180 can be relatively high in spite of the relatively low fuel flows into the engine 110. This may be particularly advantageous where the aircraft is operated at high altitudes during cruise, since contrails are likely to form under such conditions, yet fuel flow is relatively low. It will be appreciated that the return line 187 may be used selectively to enable high fuel flow rates through the condenser 180, for example in accordance with a sensed condition. At other times the fuel flow rate through the condenser 180 may be substantially the same as the fuel flow rate into the engine 110.

As the gasses in the exhaust passage 126 are cooled, water vapour in the exhaust gas condenses. The condenser 180 therefore outputs water through a water line 190. In this embodiment, the water is exhausted overboard.

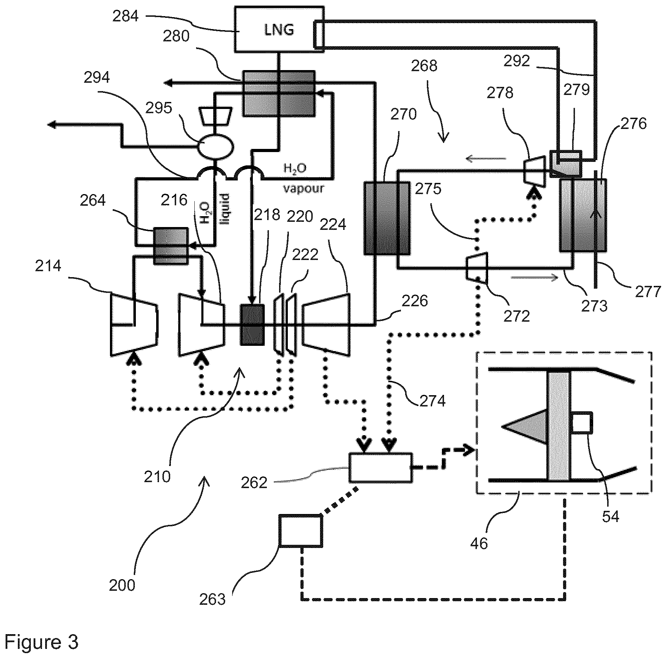

Figure 3 shows an alternative a propulsion system 200 for the aircraft 40.

The system 200 is similar to the system 100, differing mainly in the use of the fuel and water. The system comprises a gas turbine engine 210 fuelled by LNG from a tank arrangement 284, similar to engine 110, and having compressor 214, 216 having an intercooler 264 therebetween, a combustor 218, and turbines 220, 222, 224. Exhaust gasses from the engine 210 are passed through a passage 226 to a Brayton cycle heat recovery generator 268, the generator 268 comprising first and second heat exchangers 270, 276, a compressor 278 and a turbine 272, interconnected by a shaft 275. The turbine 272 also drives an electrical generator 262 via a shaft 274, the generator 262 being coupled to an energy storage device 263. Consequently, electrical power can be supplied from the generator 262 to the propulsors indirectly, via the energy storage. A condenser 280 is further provided, configured to exchange heat between the exhaust gasses downstream of the heat recovery generator 268 and the LNG fuel.

The closed Brayton cycle heat recovery generator 268 differs from the generator 168, in that, in addition to a second heat exchanger 276 configured to exchange heat between the working fluid of the generator 268 and ambient air provided through an ambient air passage 277, a third heat exchanger 279 is provided, which is configured to exchange heat between cooled working fluid downstream of the second heat exchanger 276 and the gas turbine engine 210 fuel (in this case LNG) provided by the tank arrangement 284. A return line 292 is provided, such that fuel is recirculated through the tank arrangement 284 after it has passed through the third heat exchanger 279. Advantageously, some of the heat removed from the gas turbine engine exhaust is recovered by the third heat exchanger 279, and returned to the cycle via the LNG fuel. Furthermore, due to the relatively low temperature of the LNG fuel, the inlet temperature of the compressor 278 would be reduced compared to where only ambient air is used to cool the working fluid. Consequently, a greater proportion of the work extracted from the working fluid by the turbine 272 would be available to drive the generator 262, thereby increasing cycle efficiency. However, this will reduce the heat capacity of the LNG fuel for use in the condenser 280, since part of the heat from the heat recovery generator 268 will be returned to the LNG. Consequently, the system may comprise a valve (not shown) for varying the air flow rate through the second heat exchanger 276. This would permit effective cooling of the working fluid of the heat recovery generator 268, while independently varying the amount of heat recovered to the gas turbine engine cycle. It will be appreciated that a reduction $\Delta T_1$ in the temperature of the working fluid of the Brayton cycle heat recovery generator 268 prior to the compressor 278, attributable to the third heat exchanger 279, results in a temperature reduction $\Delta T_2$ in the same working fluid at the inlet to the first heat exchanger 270, $\Delta T_2$ being greater in magnitude than $\Delta T_1$. This temperature reduction allows the working fluid to absorb heat at a greater rate from the internal combustion engine exhaust flow within the first heat exchanger 270 for the same rate of mass flow of the working fluid, advantageously reducing the exhaust flow cooling requirements within the condenser 280.

The condenser 280 also differs from the condenser 180 of the system 100. The condenser 280 is configured to provide condensed water to the intercooler 264, thereby providing cooling of compressor air prior to delivery to the second compressor 216. The water may be utilised within the intercooler by providing evaporative cooling, which generally requires a lighter, smaller intercooler compared to air to air heat exchangers. Consequently, the weight of the system is reduced. A return line 294 is provided, which returns the vaporised water (steam) to be cooled in the condenser by the LNG fuel, and returned to the intercooler 264. Advantageously, this returns to the main thermodynamic cycle heat which has been removed from compressed air in the intercooler, providing an improvement over a conventional intercooler in which heat is typically rejected to ambient air.

A portion of the water provided by the condenser 280 may be tapped off for use elsewhere on the aircraft via a diverter valve 295. For example, referring again to figure 1, trim tanks 296a, 296b could be provided at forward and aft locations on the aircraft 40. Water from the condenser 280 could be sent to either the forward or rear trim tanks 296a, 296b by a pump 298 to assist in trimming the aircraft 40 in flight. Consequently, as fuel is burned, it is replaced by water, which allows the aircraft to be trimmed by shifting the centre of mass of the aircraft, thereby reducing the use of control surface trim tabs, which would otherwise incur an aerodynamic penalty. Similarly, tip tanks 296c, 296d could be provided at the tips of each wing 44. As fuel from fuel tanks within the wings is burned, water could be pumped to the tip tanks 296c, 296d in order to provide inertia relief, thereby preventing excessive bending of the wings 44. The added mass at the end of the wings 44 would also increase the inertia of the wings 44, thereby reducing the effect of gusts. Consequently, the wing structure can be made lighter. The trim tanks 296a, 296b can also be used to achieve a similar result with respect to the fuselage.

Alternatively or in addition, the water may be used for other purposes. For example, the water could be used to provide water injection for the gas turbine engine 110, either to provide increased power for some stages of flight, or to supress the formation of nitrogen oxides ($NO_x$) in the exhaust. Some of the water could be used for usage within the passenger cabin, for example as potable water.

The water can also be used as ballast, being either retained or jettisoned as necessary during the flight, in order to optimise the flight cycle. For example, the increased weight due to the stored water can be used to compensate for the reduced aircraft weight caused by burning fuel. One effect of increasing aircraft weight (relative to aircraft weight if no water ballast were carried) during flight would be to increase the optimum flight speed (i.e. the airspeed at which drag is a minimum) compared to the optimum flight speed that would result if the aircraft were lighter due to the burned fuel. Similarly, the ballast could be used to allow the aircraft to climb at a substantially constant coefficient of lift, thereby resulting in a more efficient climb.

The water could also be used to provide increased thrust by injecting water into the propulsors 46. A still further alternative would be to jettison water at relatively low altitudes, thereby forming low level clouds. Low level clouds are thought to have a net atmospheric cooling effect, thereby reducing the environmental impact of air traffic.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the scope of the invention.

For example, though the embodiments have been described as using LNG as the fuel for the gas turbine engine, it will be understood that the invention is applicable to internal combustion engines utilising other fuels which produce water vapour when burned, such as gaseous or liquid hydrogen, or conventional aviation hydrocarbon fuel could be used instead. Also, it will be appreciated that, while the LNG is generally stored in a liquid state, the fuel will be vaporised at some point prior to combustion, possibly when heated by the condenser.

While both embodiments have been described as including an intercooler, it will be understood that this is essentially optional.

Other types of gas internal combustion engine could be used. For example, the free turbine could be replaced with a turbine that drives a compressor of the gas turbine cycle. Different numbers of compressors could be used, so that, for example, the gas turbine could comprise a single compressor driven by a single turbine. In a still further example, the internal combustion engine could comprise a piston engine, such as a Diesel or Otto cycle piston engine.

Other types of closed cycle heat recovery generator could be employed. For example, the working fluid could comprise steam, and the closed cycle heat recovery generator could comprise a Rankine cycle heat recovery generator, comprising the first heat exchanger, a turbine and a second heat exchanger in fluid flow series, with a pump being provided to provide continuous recirculation of fluid. In such cases, a compressor may not be necessary.

The electrical generator could be of a different type. Two or more electrical generators could be provided for each propulsion system for redundancy.

The propulsors could be of a different type, and could be located on a different part of the aircraft. For example, the propulsors could comprise ducted fans, and could be located at a trailing edge of the wing, configured to ingest boundary layer air. Instead of a generator and electrically driven propulsors 46, the propulsors could be mechanically driven, either directly via one of the engine shafts, or via one or more gearboxes.

Aspects of any of the embodiments of the invention could be combined with aspects of other embodiments, where appropriate.

## Claims

1. An aircraft propulsion system (100), the system comprising:

   an internal combustion engine (110) configured to produce an exhaust gas containing water vapour;
   a first heat exchanger (170) configured to exchange heat from the internal combustion engine exhaust with a working fluid of a closed cycle heat recovery generator (168) configured to convert heat from the exhaust gas to mechanical power;

a condenser (180) provided downstream of the first heat exchanger (170),

configured to condense water vapour in the exhaust gas stream; **characterised in that**

the condenser (180) comprises a heat exchanger (180) configured to exchange heat between the exhaust gas stream and the internal combustion engine fuel.

2. A system according to claim 1, wherein the internal combustion engine comprises one of a piston engine and a gas turbine engine (110).

3. A system according to claim 1 or claim 2, wherein the fuel comprises one or more of a liquid hydrocarbon fuel such as liquefied natural gas, hydrogen gas and liquid hydrogen.

4. A system according to any of the preceding claims, wherein the closed cycle heat recovery generator (168) comprises one of a supercritical carbon dioxide $(CO_2)$ working fluid and a water working fluid.

5. A system according to any of the preceding claims, wherein the closed cycle heat recovery generator comprises a closed Brayton cycle heat recovery generator comprising a compressor (178), the first heat exchanger (170), a turbine (172) and a second heat exchanger (176) provided in fluid flow series.

6. A system according to claim 5, wherein the closed Brayton cycle heat recovery generator second heat exchanger (176) is configured to exchange heat between the closed Brayton cycle heat recovery generator working fluid and a heat sink such as an ambient air stream or the internal combustion engine fuel.

7. A system according to claim 6, wherein the second heat exchanger (176) comprises an external surface configured to be an external surface of the aircraft such as an aircraft wing surface.

8. A system according to any of the preceding claims, wherein the system comprises a fuel recirculator (187) configured to return a portion of fuel downstream of the condenser (180) to a fuel tank (184).

9. A system according to claim 2 or any claim dependent thereon, wherein the gas turbine engine comprises a multi-stage compressor (114, 116) and an intercooler (164) configured to cool compressor air between compressor stages (114, 116).

10. A system according to claim 9, wherein the intercooler (164) comprises one of an air to air heat exchanger configured to exchange heat between interstage compressor air and ambient air, and a water to air heat exchanger configured to exchange heat between interstage compressor air and liquid water provided by the condenser.

11. A system according to any of the preceding claims, wherein the system comprises one or more electrical generators (162) driven by at least one of the internal combustion engine (110) and the closed cycle heat recovery generator (168).

12. A system according to claim 11, wherein the propulsion system comprises one or more propulsors (46) such as a fan, and wherein the or each propulsor (46) may be driven by one or more electrical motor (54) provided with electrical power by the or each electrical generator (162) driven by one or both of the internal combustion engine (110) and closed cycle heat recovery generator (168).

13. A system according to any of the preceding claims, wherein the system (100) comprises one or more water tanks (269a, 269b) configured to store water provided by the condenser (180), and wherein each tank (269a, 269b) may be located in a different position on the aircraft (40), and a pumping system (298) may be provided configured to transfer water between the tanks (269a, 269b).

14. An aircraft (40) comprising a propulsion system (100) according to any of the preceding claims.

**Patentansprüche**

1. Antriebssystem (100) für ein Luftfahrzeug, wobei das System folgendes umfasst:

einen Verbrennungsmotor (110), der so gestaltet ist, dass er Abgase erzeugt, die Wasserdampf enthalten;

einen ersten Wärmetauscher (170), der so gestaltet ist, dass er die Wärme der Abgase des Verbrennungsmotors mit einem Arbeitsfluid eines Regelkreis-Wärmerückgewinnungsgenerators (168) austauscht, der so gestaltet ist, dass er Wärme der Abgase in mechanische Leistung umwandelt;

einen Kondensator (180), der stromabwärts des ersten Wärmetauschers (170) bereitgestellt ist, wobei der Kondensator so gestaltet ist, dass er Wasserdampf in dem Abgasstrom kondensiert; **dadurch gekennzeichnet, dass**

der Kondensator (180) einen Wärmetauscher (180) umfasst, der so gestaltet ist, dass er Wärme zwischen dem Abgasstrom und dem Kraftstoff des Verbrennungsmotors austauscht.

2. System nach Anspruch 1, wobei der Verbrennungsmotor einen Kolbenmotor oder einen Gasturbinenmotor (110) umfasst.

3. System nach Anspruch 1 oder 2, wobei der Kraftstoff einen oder mehrere aus einem flüssigen Kohlenwasserstoff-Kraftstoff, wie etwa Flüssigerdgas, Wasserstoffgas und flüssigem Wasserstoff umfasst.

4. System nach einem der vorstehenden Ansprüche, wobei der Regelkreis-Wärmerückgewinnungsgenerator (168) ein überkritisches Kohlendioxid-Arbeitsfluid ($CO_2$-Arbeitsfluid) oder ein Wasser-Arbeitsfluid umfasst.

5. System nach einem der vorstehenden Ansprüche, wobei der Regelkreis-Wärmerückgewinnungsgenerator einen Brayton-Kreisprozess-Wärmerückgewinnungsgenerator umfasst, der einen Kompressor (178), den ersten Wärmetauscher (170), eine Turbine (172) und einen zweiten Wärmetauscher (176) umfasst, die in Flüssigkeitsströmungsreihe bereitgestellt sind.

6. System nach Anspruch 5, wobei der zweite Wärmetauscher (176) des Brayton-Kreisprozess-Wärmerückgewinnungsgenerators so gestaltet ist, dass er Wärme zwischen dem Arbeitsfluid des Brayton-Kreisprozess-Wärmerückgewinnungsgenerators und einem Wärmeableiter austauscht, wie etwa einem Umgebungsluftstrom oder dem Kraftstoff des Verbrennungsmotors.

7. System nach Anspruch 6, wobei der zweite Wärmetauscher (176) eine äußere Oberfläche umfasst, die so gestaltet ist, dass sie eine äußere Oberfläche des Luftfahrzeugs ist, wie etwa eine Flügeloberfläche des Luftfahrzeugs.

8. System nach einem der vorstehenden Ansprüche, wobei das System einen Kraftstoffrezirkulator (187) umfasst, der so gestaltet ist, dass er einen Teil des Kraftstoffs stromabwärts des Kondensators (180) zu einem Kraftstofftank (184) rezirkuliert.

9. System nach Anspruch 2 oder einem Unteranspruch davon, wobei der Gasturbinenmotor einen Mehrstufenkompressor (114, 116) und einen Ladeluftkühler (164) umfasst, der so gestaltet ist, dass er Kompressorluft zwischen Kompressorstufen (114, 116) kühlt.

10. System nach Anspruch 9, wobei der Ladeluftkühler (164) einen Luft-Luft-Wärmetauscher, der so gestaltet ist, dass er Wärme zwischen Zwischenstufenkompressorluft und Umgebungsluft austauscht, umfasst, oder einen Wasser-Luft-Wärmetauscher, der so gestaltet ist, dass er Wärme zwischen Zwischenstufenkompressorluft und durch den Kondensator bereitgestelltem flüssigem Wasser austauscht.

11. System nach einem der vorstehenden Ansprüche, wobei das System einen oder mehrere elektrische Generatoren (162) umfasst, die angetrieben werden durch wenigstens den Verbrennungsmotor (110) oder den Regelkreis-Wärmerückgewinnungsgenerator (168).

12. System nach Anspruch 11, wobei das Antriebssystem einen oder mehrere Propulsoren (46) umfasst, wie etwa ein Gebläse, und wobei der oder jeder Propulsor (46) durch einen oder mehrere Elektromotoren (54) angetrieben werden kann, der/die durch den oder jeden elektrischen Generator (162) mit elektrischer Leistung versorgt werden, der/die durch den Verbrennungsmotor (110) und/oder den Regelkreis-Wärmerückgewinnungsgenerator (168) angetrieben werden.

13. System nach einem der vorstehenden Ansprüche, wobei das System (100) einen oder mehrere Wassertanks (269a, 269b) umfasst, die so gestaltet sind, dass sie Wasser speichern, dass durch den Kondensator (180) bereitgestellt wird, und wobei sich jeder Tank (269a, 269b) an einer anderen Position an dem Luftfahrzeug (40) befinden kann, und wobei ein Pumpsystem (298) bereitgestellt sein kann, das so gestaltet ist, dass es Wasser zwischen den Tanks (269a, 269b) überträgt.

14. Luftfahrzeug (40), das ein Antriebssystem (100) nach einem der vorstehenden Ansprüche umfasst.

**Revendications**

1. Système de propulsion d'avion (100), le système comprenant :

un moteur à combustion interne (110) conçu pour produire un gaz d'échappement contenant de la vapeur d'eau ;
un premier échangeur de chaleur (170) conçu pour échanger de la chaleur provenant de l'échappement du moteur à combustion interne avec un fluide de travail d'un générateur (168) de récupération de chaleur à cycle fermé conçu pour convertir la chaleur provenant des gaz d'échappement en énergie mécanique ;
un condenseur (180) disposé en aval du premier échangeur de chaleur (170), conçu pour condenser la vapeur d'eau dans le flux de gaz d'échappement ; **caractérisé en ce que**
le condenseur (180) comprend un échangeur de chaleur (180) conçu pour échanger la chaleur entre le flux de gaz d'échappement et le carburant du moteur à combustion interne.

**2.** Système selon la revendication 1, le moteur à combustion interne comprenant un moteur à piston ou une turbine à gaz (110).

**3.** Système selon la revendication 1 ou 2, le carburant comprenant au moins un combustible hydrocarboné liquide tel que du gaz naturel liquéfié, du gaz hydrogène ou de l'hydrogène liquide.

**4.** Système selon l'une quelconque des revendications précédentes, le générateur (168) de récupération de chaleur à cycle fermé comprenant un fluide de travail au dioxyde de carbone ($CO_2$) supercritique ou un fluide de travail à l'eau.

**5.** Système selon l'une quelconque des revendications précédentes, le générateur de récupération de chaleur à cycle fermé comprenant un générateur de récupération de chaleur à cycle de Brayton fermé comprenant un compresseur (178), le premier échangeur de chaleur (170), une turbine (172) et un second échangeur de chaleur (176) reliés fluidiquement en série.

**6.** Système selon la revendication 5, le second échangeur de chaleur (176) du générateur de récupération de chaleur à cycle de Brayton fermé étant conçu pour échanger de la chaleur entre le fluide de travail du générateur de récupération de chaleur à cycle de Brayton fermé et un dissipateur de chaleur tel qu'un flux d'air ambiant ou le carburant du moteur à combustion interne.

**7.** Système selon la revendication 6, le second échangeur de chaleur (176) comprenant une surface externe conçue pour être une surface externe de l'avion telle qu'une surface d'aile d'avion.

**8.** Système selon l'une quelconque des revendications précédentes, le système comprenant un recycleur de carburant (187) conçu pour renvoyer une partie du carburant en aval du condenseur (180) à un réservoir de carburant (184).

**9.** Système selon la revendication 2 ou toute réclamation en dépendant, la turbine à gaz comprenant un compresseur à plusieurs étages (114, 116) et un refroidisseur intermédiaire (164) conçu pour refroidir l'air du compresseur entre les étages du compresseur (114, 116).

**10.** Système selon la revendication 9, le refroidisseur intermédiaire (164) comprenant un échangeur de chaleur air-air conçu pour échanger de la chaleur entre l'air du compresseur à plusieurs étages et l'air ambiant, et un échangeur de chaleur eau-air conçu pour échanger de la chaleur entre l'air du compresseur à plusieurs étages et l'eau liquide fournie par le condenseur.

**11.** Système selon l'une quelconque des revendications précédentes, le système comprenant au moins un générateur électrique (162) entraîné par le moteur à combustion interne (110) et/ou le générateur (168) de récupération de chaleur à cycle fermé.

**12.** Système selon la revendication 11, le système de propulsion comprenant au moins un propulseur (46) tel qu'un ventilateur, et le ou chaque propulseur (46) pouvant être entraîné par au moins un moteur électrique (54) alimenté en électricité par le ou chaque générateur électrique (162) entraîné par le moteur à combustion interne (110) et/ou le générateur (168) de de récupération de chaleur à cycle fermé.

**13.** Système selon l'une quelconque des revendications précédentes, le système (100) comprenant au moins un réservoir d'eau (269a, 269b) conçu pour stocker l'eau amenée par le condenseur (180), et chaque réservoir (269a, 269b) pouvant être situé à une position différente sur l'avion (40), et un système de pompage (298) pouvant être conçu pour transférer l'eau entre les réservoirs (269a, 269b).

**14.** Avion (40) comprenant un système de propulsion (100) selon l'une quelconque des revendications précédentes.

Figure 1

Figure 2

Figure 3

**EP 3 048 281 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7971438 B
- WO 2014158244 A
- WO 2014130117 A
- EP 2392796 A